# EUROPÄISCHE PATENTANMELDUNG

(11) **EP 1 510 397 A1**
(43) Veröffentlichungstag der Anmeldung: **02.03.2005**
(21) Anmeldenummer: 04018991.2
(22) Anmeldetag: 11.08.2004
(51) Int. Cl.: B60N 2/46, B60N 3/10

(54) **Mittelarmlehne für Kraftfahrzeuge**

(30) Priorität: 29.08.2003 DE 10340322
(71) Anmelder: DaimlerChrysler AG, 70567 Stuttgart (DE)
(72) Erfinder: Burki, Emiel, 70199 Stuttgart (DE); Gramlich, Timo, 70771 Leinfelden-Echterdingen (DE); Jocher, Reiner, 71134 Aidlingen (DE); Partsch, Thomas, 71063 Sindelfingen (DE); Stark, Rainer, 71665 Vaihingen/Enz (DE); Uhlig, Frank Markus, 70193 Stuttgart (DE)

(57) **Zusammenfassung**

Es wird eine Mittelarmlehne (1) für die Vordersitze eines Kraftfahrzeugs, die um eine in Querrichtung zur Fahrzeuglängsachse verlaufende erste Achse (13) zwischen einer zumindest im Wesentlichen waagrechten, vorderen Gebrauchsstellung und einer zumindest im Wesentlichen waagrechten, hinteren Gebrauchsstellung schwenkbar ist, vorgeschlagen. Die Mittelarmlehne (1) zeichnet sich dadurch aus, dass sie auch um eine in senkrechter Richtung zur ersten Achse (13) verlaufende zweite Achse (15) schwenkbar ist.

## Beschreibung

Die Erfindung betrifft eine Mittelarmlehne für Kraftfahrzeuge, gemäß Oberbegriff des Anspruchs 1.

Aus der DE 34 32 084 C2 geht eine an einem Vordersitz eines Kraftfahrzeugs angeordnete Armlehne hervor, die um eine zur Fahrzeugquerachse parallel verlaufende erste Achse zwischen einer waagrechten Gebrauchsstellung und einer hochgeklappten Nichtgebrauchsstellung um 90° schwenkbar ist. Um die Armlehne beim Hochklappen an einer Rückenlehne des Vordersitzes seitlich vorbei in die Nichtgebrauchslage bewegen zu können, ist die Armlehne ferner um 90° um eine senkrecht zur ersten Achse verlaufende zweite Achse schwenkbar.

Aus der DE 31 43 957 C2 geht eine Mittelarmlehne der hier angesprochen Art hervor, die um eine in Querrichtung zur Fahrzeuglängsachse verlaufende erste Achse zwischen einer waagrechten, vorderen Gebrauchsstellung und einer waagrechten, hinteren Gebrauchsstellung um 180° schwenkbar ist. Auf Grund dieser Ausgestaltung kann die Mittelarmlehne wahlweise von den auf den Vordersitzen Platz findenden Personen und von auf den im Fondbereich vorgesehen Rücksitzen sitzenden Personen genutzt werden. Die bekannte Mittelarmlehne weist eine im Wesentlichen ebene Armablagefläche, eine mittels eines Deckels verschließbare Ablagefläche sowie sogenannte Cupholder (Getränkebehälterhalter) in Form von entsprechend geformten Vertiefungen auf. Nachteilig ist, dass diese Funktionselemente beziehungsweise -flächen auf Grund ihrer lagefesten Anordnung an der Mittelarmlehne jeweils entweder nur von den auf den Vordersitzen oder nur von den auf den Fondsitzen befindlichen Personen genutzt werden können.

Es ist Aufgabe der Erfindung, eine Mittelarmlehne der eingangs genannten Art zu schaffen, die verbesserte Funktionalität aufweist.

Zur Lösung der Aufgabe wird eine Mittelarmlehne mit den Merkmalen des Anspruchs 1 vorgeschlagen. Diese zeichnet sich dadurch aus, dass sie sowohl um eine in Querrichtung zur Fahrzeuglängsachse verlaufende erste Achse zwischen einer zumindest im Wesentlichen waagrechten, vorderen Gebrauchsstellung und einer zumindest im Wesentlichen waagrechten, hinteren Gebrauchsstellung als auch um eine in senkrechter Richtung zur ersten Achse verlaufende zweite Achse verschwenkbar ist. Dadurch ist es möglich, dass an der Mittelarmlehne vorgesehene, lagefest angeordnete Funktionselemente und -flächen, beispielsweise Cupholder oder eine Armauflagefläche, sowohl von den Vordersitzen als auch auf den Rücksitzen befindlichen Personen gleichermaßen genutzt werden können. Die Mittelarmlehne zeichnet sich durch eine hohe Funktionalität aus.

In bevorzugter Ausführungsform der Mittelarmlehne ist vorgesehen, dass diese um die zweite Achse in einem Bereich von mindestens 0° bis 180° schwenkbar ist. Das bedeutet, dass beispielsweise eine bei in waagrechter, vorderer Gebrauchsstellung angeordneter Mittelarmlehne auf deren Oberseite befindliche Aufnahme für Gegenstände in gleicher Weise auch von den Fondpassagieren genutzt werden kann. Hierzu ist die Mittelarmlehne lediglich in die waagrechte, hintere Gebrauchstellung und um 180° um die zweite Achse zu schwenken, so dass die Aufnahme sich wiederum auf der Oberseite der Mittelarmlehne befindet.

Bei einem besonders vorteilhaften Ausführungsbeispiel der Mittelarmlehne ist vorgesehen, dass die Mittelarmlehne um die zweite Achse in einem Bereich von 0° bis 360° in und entgegen dem Uhrzeigersinn schwenkbar ist, wodurch der Handhabungskomfort für Fahrzeuginsassen an jedem Sitzplatz im Kraftfahrzeug zumindest annährend gleich gut ist.

Besonders bevorzugt wird auch ein Ausführungsbeispiel der Mittelarmlehne, das sich dadurch auszeichnet, dass die Mittelarmlehne auf einer Seite wenigstens eine Aufnahme für Gegenstände und auf der gegenüberliegenden Seite eine geschlossene Armauflagefläche aufweist. Die Aufnahme kann beispielsweise ein offenes Ablagefach, ein mittels eines vorzugsweise schwenkbar an der Mittelarmlehne gelagerten Deckels verschließbares Ablagefach und/oder ein Cupholder sein. Durch ein entsprechendes Schwenken der Mittelarmlehne ist jedes dieser Funktionselemente/Funktionsflächen sowohl von den im vorderen als auch im hinteren Fahrzeugbereich befindlichen Personen in der dafür jeweils vorgesehenen Weise nutzbar. Die Mittelarmlehne weist daher eine besonders hohe Funktionalität auf.

Schließlich wird ein Ausführungsbeispiel der Mittelarmlehne bevorzugt, bei der die Mittelarmlehne an einem zwischen den Vordersitzen anordenbaren Basisteil schwenkbar gelagert ist. Die Mittelarmlehne ist also nicht an einem der Fahrzeugsitze befestigt, sondern befindet sich vorzugsweise in der Mitte zwischen den Vordersitzen.

Weitere vorteilhafte Ausführungsbeispiele der Mittelarmlehne ergeben sich aus Kombinationen der in den Unteransprüchen genannten Merkmale.

Die Erfindung wird im Folgenden anhand der Zeichnung näher erläutert. Es zeigen:
- Fig. 1: in perspektivischer Darstellung eine Gesamtansicht eines Ausführungsbeispiels der erfindungsgemäßen Mittelarmlehne;
- Fig. 2: eine Seitenansicht der Mittelarmlehne gemäß Figur 1 in verschiedenen Schwenkstellungen;
- Fig. 3: eine Stirnansicht der Mittelarmlehne gemäß Figur 1;
- Fig. 4: einen Querschnitt durch ein weiteres Ausführungsbeispiel der Mittelarmlehne im Bereich einer Aufnahme für Gegenstände und
- Fig. 5: eine perspektivische Darstellung eines in der Aufnahme befestigbaren Zusatzteils.

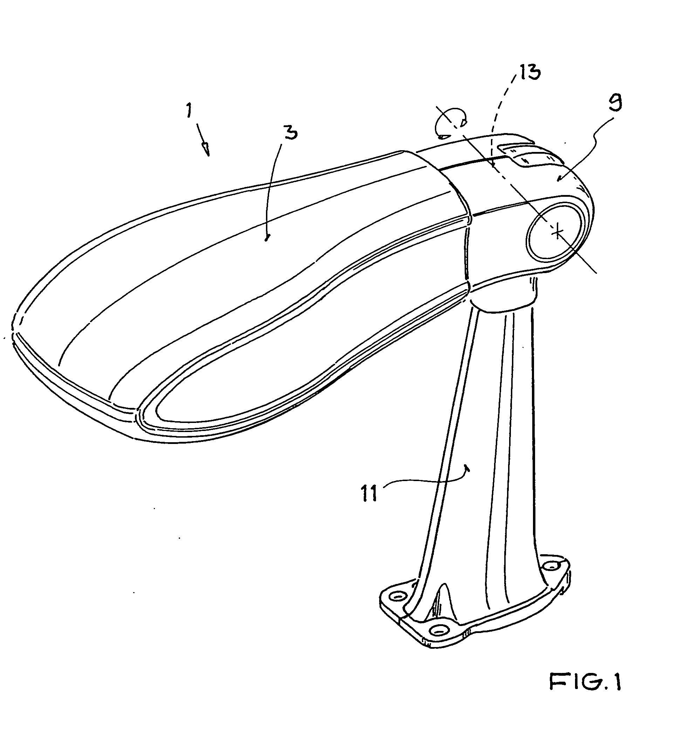

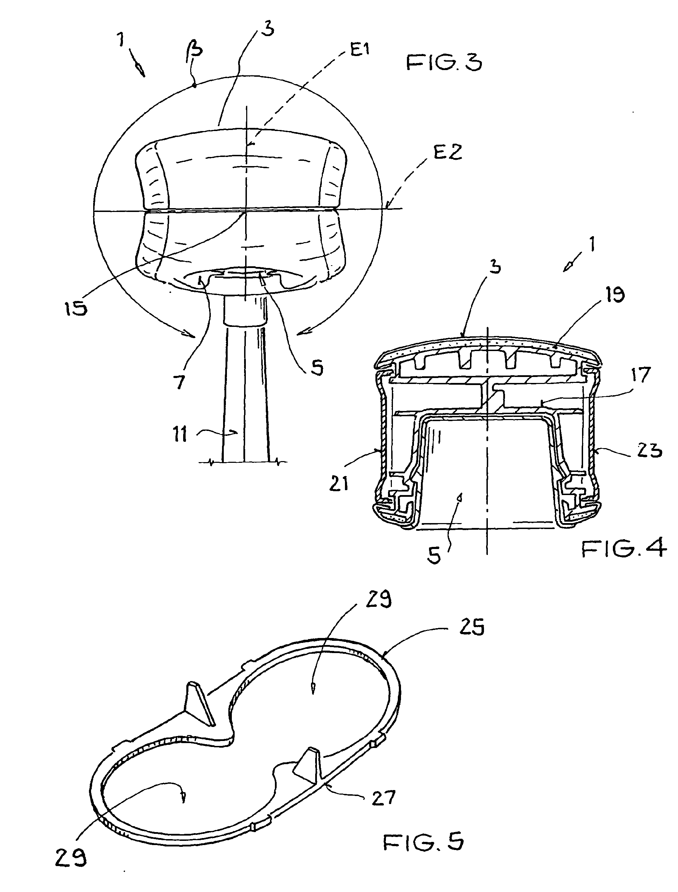

Figur 1 zeigt ein Ausführungsbeispiel einer Mittelarmlehne 1 für Kraftfahrzeuge, die mehreren im Fahrzeuginnenraum angeordneten Sitzen zugeordnet ist. Die Mittelarmlehne 1 ist vorzugsweise zwischen den Vordersitzen angeordnet. Die Mittelarmlehne 1 weist in der Darstellung gemäß Figur 1 auf ihrer Oberseite eine geschlossene Armauflagefläche 3 und auf der gegenüberliegenden Seite, hier die Unterseite, eine in Figur 3 erkennbare Aufnahme 5 zur Unterbringung von Gegenständen auf. Die Aufnahme 5 ist in Form und Größe so gestaltet, dass sie auch als Cupholder 7, also als Halter für Getränkebehälter genutzt werden kann.

Die Mittelarmlehne 1 ist an einem Schwenkkopf 9 angebracht, der wiederum am freien Ende eines an der Fahrzeugkarosserie lagefest befestigbaren Basisteil 11 in Form eines Ständers angeordnet ist. Die Höhe des Basisteils 1 ist so gewählt, dass sich die Mittelarmlehne 1 in einer gewünschten Höhe relativ gegenüber den auf den Fahrzeugsitzen befindlichen Personen befindet. Der Schwenkkopf 9 ist gemeinsam mit der Mittelarmlehne 1 um die erste Achse 13 schwenkbar. Die erste Achse 13 verläuft bei im Kraftfahrzeug eingebauten Zustand der Mittelarmlehne 1 und des Basisteils 11 in Querrichtung zur Fahrzeuglängsachse.

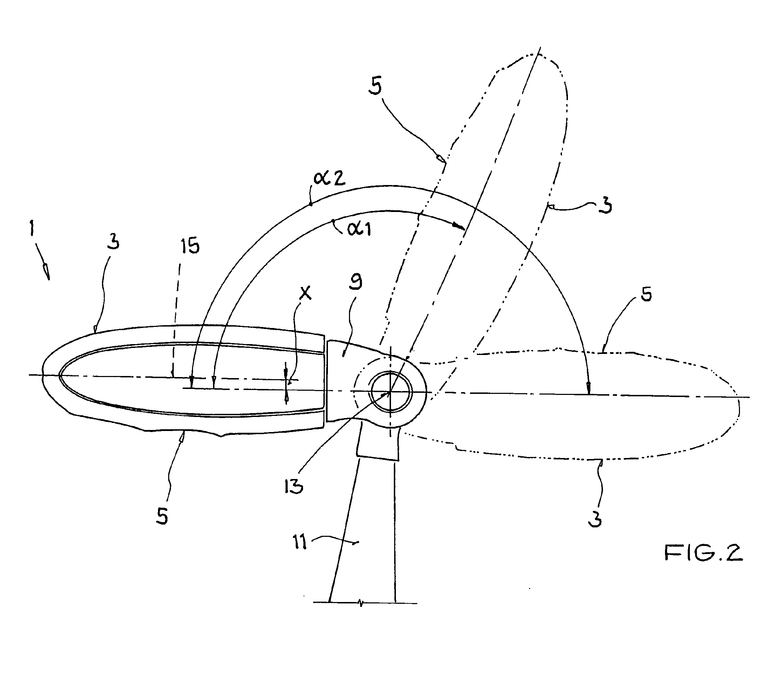

In Figur 2 ist die Mittelarmlehne 1 mit durchgezogener Linie in einer vorderen Gebrauchsstellung dargestellt, in der die Armauflagefläche 3 im Wesentlichen parallel zu einer gedachten Horizontalen/Waagrechten verläuft. In dieser Gebrauchsstellung befindet sich die Mittelarmlehne 1 zwischen den Vordersitzen des Kraftfahrzeugs. Die Mittelarmlehne 1 ist aus der vorderen Gebrauchsstellung in eine mit gestrichelter Linie dargestellte Nichtgebrauchsstellung hochklappbar, in der die Mittelarmlehne 1 im Wesentlichen parallel zu den Rückenlehnen der Vordersitze verläuft. Hierzu ist die Mittelarmlehne 1 aus der vorderen Gebrauchslage um den Winkel α1 im Uhrzeigersinn um die erste Achse 13 zu schwenken. Der Winkel α1 beträgt bei diesem Ausführungsbeispiel in etwa 115°. Die Mittelarmlehne 1 ist ferner in eine mit gestrichelter Linie dargestellte hintere Gebrauchsstellung schwenkbar, in der sie zwischen im Fondbereich des Kraftfahrzeugs vorgesehenen Rücksitzen angeordnet ist. Hierzu ist die Mittelarmlehne 1 ausgehend von ihrer vorderen Gebrauchsstellung um einen Winkel α2 von 180° im Uhrzeigersinn um die erste Achse 13 zu schwenken. Wie aus Figur 2 ersichtlich, befindet sich die zuvor in der vorderen Gebrauchsstellung auf der Oberseite der Mittelarmlehne 1 angeordnete Armauflagefläche 3 bei in hinterer Gebrauchsstellung angeordneter Mittelarmlehne 1 nunmehr auf deren Unterseite, während die Aufnahme 5 für Gegenstände nun auf der Oberseite angeordnet ist.

Damit die Armauflagefläche 3 und die Aufnahme 5 jeweils in der vorderen als auch in der hinteren Gebrauchsstellung der Mittelarmlehne 1 von den dort befindlichen Personen in der dafür vorgesehener Weise genutzt werden können, ist die Mittelarmlehne 1 ferner um eine zweite Achse 15 relativ gegenüber dem Schwenkkopf 9 -vorzugsweise im und entgegen dem Uhrzeigersinn- um einen Winkel β schwenkbar, der mindestens 180°, vorzugsweise 360° beträgt, wie in Figur 3 angedeutet.

Wie aus Figur 2 ersichtlich, verläuft bei diesem Ausführungsbeispiel die zweite Achse 15 in senkrechter Richtung zu der senkrecht zur Bildebene der Figur 2 verlaufenden ersten Achse 13, wobei die zweite Achse 15 die erste Achse 13 nicht schneidet, sondern zu dieser um den Abstand x versetzt angeordnet ist. Andere Ausführungsvarianten sind möglich.

Zur selbsttätigen Lagefixierung der Mittelarmlehne 1 gegenüber dem Schwenkkopf 9 in einer ersten Vorzugsstellung, in der sich die Armauflagefläche 3 auf der Oberseite der Mittelarmlehne 1 befindet, und in einer zweiten Vorzugsstellung, in der sich die Aufnahme 5 auf der Oberseite der Mittelarmlehne 1 befindet, ist ein in den Figuren nicht dargestellter erster Rastmechanismus vorgesehen, der beispielsweise durch eine Zapfen-Loch-Rastverbindung gebildet sein kann. Die Zapfen-Loch-Rastverbindung umfasst beispielsweise mindestens einen an dem einen Bauteil angeordneten Raststift, der in Gegenüberlage in eine am anderen Bauteil vorgesehene Öffnung eingreift und somit diese Bauteile gegen ein Verdrehen/Verschwenken um die zweite Achse 15 sichert. Zum Zwecke der formschlüssigen Fixierung der Mittelarmlehne 1 am Schwenkkopf 9 in den beiden Vorzugsstellungen sind entweder zwei Öffnungen und ein Raststift oder zwei Raststifte und eine Öffnung erforderlich.

In Figur 2 ist die Mittelarmlehne 1 im verrasteten Zustand dargestellt. Um die Rastverbindung aufzuheben, wird die Mittelarmlehne 1 in Richtung der zweiten Achse 15 vom Schwenkkopf 9 entgegen der Kraft eines Federelements wegbewegt, wodurch der Eingriff des Raststifts in die Öffnung aufgehoben wird, so dass die Mittelarmlehne 1 in gewünschter Weise um die zweite Achse 15 schwenkbar ist. Bei Erreichen der gewünschten Vorzugsstellung, in der sich die Öffnung und der Raststift in Gegenüberlage befinden, drückt das Federelement die Mittelarmlehne 1 in Richtung des Schwenkkopfs 9, so dass der Raststift in die Öffnung selbsttätig einfährt.

Bei einer anderen Ausführungsvariante des ersten Rastmechanismus ist vorgesehen, dass der mindestens eine Raststift entgegen einer Federkraft beweglich ist, wobei die Öffnung und/oder der Raststift so gestaltet sind, dass die Formschlussverbindung durch Aufbringen eines bestimmten Lösedrehmoments auf die Mittelarmlehne 1 aufgehoben wird, indem der Raststift entgegen der Federkraft aus der Öffnung herausgedrängt wird, wobei er bei Erreichen einer Gegenüberlage mit einer Öffnung selbsttätig in diese einfährt.

Andere Ausgestaltungen des ersten Rastmechanismus sind möglich. Wichtig ist, dass die Mittelarmlehne 1 in den gewünschten Stellungen relativ gegenüber dem Schwenkkopf 9 lagefest fixierbar ist, damit ein ungewolltes Verschwenken der Mittelarmlehne 1 ausgeschlossen werden kann.

Die vorstehend beschriebene Mittelarmlehnenanordnung, umfassend die Mittelarmlehne 1, den Schwenkkopf 9 sowie das Basisteil 11, kann ferner einen zweiten Rastmechanismus zur vorzugsweise selbsttätigen Lagefixierung des Schwenkkopfs 9 gegenüber dem Basisteil 11 in mindestens einer, durch Verschwenken des Schwenkkopfs 9 um die erste Achse 13 einnehmbaren Vorzugsstellung, beispielsweise die hochgeklappte Nichtgebrauchsstellung, umfassen. Zur Sicherung der Mittelarmlehne 1 in ihren beiden Endstellungen (vordere und hintere Gebrauchsstellung) können entsprechende Anschläge am Basisteil 11 vorgesehen sein, an die der Schwenkkopf 9 anschlägt.

Damit die Mittelarmlehne 1 in jeder Vorzugsstellung eine zumindest im Wesentlichen gleiche Optik aufweist, sind bei dem in Figur 1 dargestellten Ausführungsbeispiel die Mittelarmlehne 1 und der Schwenkkopf 9 jeweils in etwa spiegelsymmetrisch zu einer gedachten, die Längsmittelachse des jeweiligen Bauteils schneidenden Ebene ausgebildet, wobei bei diesem Ausführungsbeispiel die Längsmittelachse der Mittelarmlehne 1 konzentrisch zur zweiten Achse 15 verläuft. In Figur 3 sind eine vertikal verlaufende erste Spiegelebene E1 und einer horizontal verlaufende zweite Spiegelebene E2 der Mittelarmlehne 1 angedeutet.

Figur 4 zeigt ein weiteres Ausführungsbeispiel der erfindungsgemäßen Mittelarmlehne 1 im Querschnitt. Gleiche Teile sind mit gleichen Bezugszeichen versehen, so dass insofern auf die Beschreibung zu den Figuren 1 bis 3 verwiesen wird. Es ist ersichtlich, dass die Mittelarmlehne 1 ein Tragelement 17 umfasst, an dem unter anderem in der Darstellung gemäß der Figur 4 auf der Unterseite eine topfförmig ausgebildete Aufnahme 5, auf der Oberseite ein die Armauflagefläche 3 aufweisendes Schalenelement 19 sowie an den Seiten jeweils ein weiteres, geschlossenes Schalenelement 21 beziehungsweise 23 angebracht sind. Die vorstehend beschriebenen Teile sind vorzugsweise mittels wenigstens einer Clips- und/oder Rastverbindung am Tragelement 17 befestigt.

In die Aufnahme 5 ist ein in Figur 5 dargestelltes, plattenförmiges Zusatzteil 25 einsetzbar, das mittels einer Clipsund/oder Rastverbindung im oberen Randbereich der Aufnahme 5 lösbar befestigbar ist, worauf nicht näher eingegangen wird. Das Zusatzteil 25 ist in Form und Größe an die Innenkontur der Aufnahme 5 so angepasst, dass nur ein geringes Spaltmaß zwischen dem Umfangsrand 27 des Zusatzteils 25 und der Innenwand der Aufnahme 5 besteht. Das Zusatzteil 25 ist hier mit zwei kreisförmigen, als Cupholder 7 dienenden Durchgangsöffnungen 29 versehen, in die Getränkebehälter, beispielsweise Dosen oder Flaschen einführbar sind, die am Boden der Aufnahme 5 abgestellt werden und durch die Durchgangsöffnungen 29 an einem Umkippen gehindert sind. Das Zusatzteil 25 kann je nach Bedarf in die Aufnahme 5 eingebracht und wieder entfernt werden.

Zusammenfassend bleibt festzuhalten, dass die anhand der Figuren 1 bis 5 beschriebene Mittelarmlehne 1 auf Grund ihrer Schwenkbarkeit in mehreren Ebenen und großen Winkelbereichen eine hohe Funktionalität aufweist, da an der Mittelarmlehne 1 vorgesehene Funktionselemente, beispielsweise die Aufnahme 5 und die Cupholder 7, und Funktionsflächen, beispielsweise die Armauflagefläche 3, sowohl auf den vorderen Sitzen als auch auf den dahinter angeordneten Rücksitzen in gleichem Maße genutzt werden können.

## Patentansprüche

1. Mittelarmlehne (1) für Kraftfahrzeuge, die um eine in Querrichtung zur Fahrzeuglängsachse verlaufende erste Achse (13) zwischen einer zumindest im Wesentlichen waagrechten, vorderen Gebrauchsstellung und einer zumindest im Wesentlichen waagrechten, hinteren Gebrauchsstellung schwenkbar ist,
**dadurch gekennzeichnet,**
**dass** die Mittelarmlehne (1) auch um eine in senkrechter Richtung zur ersten Achse (13) verlaufende zweite Achse (15) schwenkbar ist.

2. Mittelarmlehne nach Anspruch 1,
**dadurch gekennzeichnet,**
**dass** die Mittelarmlehne (1) um die zweite Achse (15) um einen Winkel (β) schwenkbar ist, der im Bereich von mindestens 0° bis 180°, vorzugsweise 0° bis 360° liegt.

3. Mittelarmlehne nach Anspruch 1 oder 2,
**dadurch gekennzeichnet,**
**dass** die Mittelarmlehne (1) auf einer Seite wenigstens eine Aufnahme (5) für Gegenstände und auf der gegenüberliegenden Seite eine -vorzugsweise geschlossene- Armauflagefläche (3) aufweist.

4. Mittelarmlehne nach einem der Ansprüche 1 bis 3,
**dadurch gekennzeichnet,**
**dass** die Mittelarmlehne (1) an einem zwischen den Vordersitzen des Kraftfahrzeugs anordenbaren Basisteil (11) schwenkbar gelagert ist.

5. Mittelarmlehne nach Anspruch 4,
**dadurch gekennzeichnet,**
**dass** an dem Basisteil (11) ein um die erste Achse (13) schwenkbarer Schwenkkopf (9) vorgesehen ist, an dem die Mittelarmlehne (1) um die zweite Achse (15) schwenkbar gehalten ist.

6. Mittelarmlehne nach einem der Ansprüche 1 bis 5,
**gekennzeichnet durch**
einen ersten Rastmechanismus zur vorzugsweise selbsttätigen Lagefixierung der Mittelarmlehne (1) gegenüber dem Schwenkkopf (9) in mehreren, **durch** Verschwenken der Mittelarmlehne (1) um die zweite Achse (15) einnehmbaren Vorzugsstellungen.

7. Mittelarmlehne nach einem der Ansprüche 1 bis 6,
**gekennzeichnet durch**
einen zweiten Rastmechanismus zur vorzugsweise selbsttätigen Lagefixierung des Schwenkkopfs (9) gegenüber dem Basisteil (11) in mindestens einer, **durch** Verschwenken des Schwenkkopfs (9) um die erste Achse (13) einnehmbaren Vorzugsstellung.

8. Mittelarmlehne nach einem der Ansprüche 1 bis 7,
**dadurch gekennzeichnet,**
**dass** die Mittelarmlehne (1) zumindest im Wesentlichen spiegelsymmetrisch zu einer gedachten, die Längsmittelachse der Mittelarmlehne (1) schneidenden Ebene (E1,E2) ausgebildet ist.

9. Mittelarmlehne nach einem der Ansprüche 1 bis 8,
**dadurch gekennzeichnet,**
**dass** der Schwenkkopf (9) zumindest im Wesentlichen spiegelsymmetrisch zu einer gedachten, die Längsmittelachse des Schwenkkopfs (9) scheidenden Ebene ausgebildet ist.

10. Mittelarmlehne nach Anspruch 3,
**dadurch gekennzeichnet,**
**dass** die Aufnahme (5) mindestens einen Cupholder (7) aufweist.

11. Mittelarmlehne nach Anspruch 10,
**dadurch gekennzeichnet,**
**dass** der Cupholder (7) an einem plattenförmigen Zusatzteil (25) ausgebildet ist, das in der Aufnahme (5) lösbar befestigbar ist.
